# EUROPÄISCHE PATENTSCHRIFT

(11) **EP 2 783 752 B1**
(45) Veröffentlichungstag und Bekanntmachung des Hinweises auf die Patenterteilung: **17.08.2016**
(21) Anmeldenummer: 14156172.0
(22) Anmeldetag: 21.02.2014
(51) Int. Cl.: B01L 3/00, F16K 99/00

(54) **Normal-geschlossenes Ventil für mikrofluidische Bauteile aus einem polymeren Schichtsystem sowie Verfahren**
Normally closed valve for microfluidic components of polymeric multilayers and method
Vanne normalment serrée pour composants microfluidiques de couches aux polymères et procédé

(30) Priorität: 27.03.2013 DE 102013205412
(43) Veröffentlichungstag der Anmeldung: 01.10.2014
(73) Patentinhaber: ROBERT BOSCH GMBH, 70442 Stuttgart (DE)
(72) Erfinder: Laermer, Franz, 71263 Weil Der Stadt (DE); Rupp, Jochen, 70178 Stuttgart (DE); Czurratis, Daniel, 70563 Stuttgart (DE); Gumbel, Tim, 67346 Speyer (DE)

(56) Entgegenhaltungen:
- WO-A1-2008/016271
- WO-A1-2008/083446
- DE-A1-102011 005 811

## Beschreibung

### Stand der Technik

Als Lab-on-a-Chip (LOC) werden Systeme bezeichnet, bei der die gesamte Funktionalität eines makroskopischen Labors auf einem beispielsweise kreditkartengroßen Kunststoffsubstrat untergebracht wird. LOC-Systeme werden häufig für mikrofluidische Anwendungen eingesetzt, bei denen komplexe biologische, chemische und/oder physikalische Prozesse miniaturisiert ablaufen können. Hierfür sind Kanäle und Kavitäten notwendig, um die Flüssigkeiten zum einen in Reservoiren zu lagern und diese zum anderen innerhalb des LOC-Systems mit Hilfe von Ventilen zu dosieren bzw. deren Abgabe zeitlich zu steuern.

In vielen Fällen bestehen LOC-Systeme aus einem polymeren Schichtaufbau. Dieser Aufbau besteht im einfachsten Fall aus zwei Polymersubstraten, welche Kavitäten in Form von Kammern und Kanälen beinhalten. Zwischen den Polymersubstraten befindet sich eine flexible Polymermembranfolie, welche als eine Membran für das Ventil vorgesehen ist. Um die Funktionalität des LOC-Systems zu gewährleisten, müssen die notwendigen Flüssigkeiten entweder direkt im LOC-Chip (,on-chip') gelagert oder von außen über fluidische Schnittstellen zugeführt werden.

Für viele LOC-Anwendungen ist es von Vorteil, die für die Funktionsweise des Chips notwendigen Flüssigkeiten 'on-chip' zu lagern. Dafür sind fluiddichte Reservoire und Ventile notwendig, um einen Verlust der Flüssigkeiten durch Diffusion auch über längere Lagerungszeiten zu verhindern. Die Ventiltechnologie beruht dabei auf der pneumatischen Auslenkung der Polymermembranfolie, um Ventile zu öffnen oder zu schließen. Nachteilig ist hierbei, dass auf dem Chip vorgelagerten Flüssigkeiten ohne pneumatischen Anschluss nicht fluiddicht gelagert werden können, da die Ventile im Grundzustand nicht geschlossen sind.

Des Weiteren ist es aus dem Stand der Technik bekannt, flüssige Reagenzien während des Herstellungsprozesses in einem mikrofluidischen System einzuschließen. Dabei können zum Beispiel Sollbruchstellen im Polymer-Membran-Verbund ausgebildet sein, die sich beim Erreichen eines vorbestimmten Drucks öffnen und somit eine Abgabe der Reagenzien in das LOC ermöglichen.

Aus dem Dokument WO 2008/016271 A1 ist eine Vorrichtung zur chemischen Analyse mit einem Berstventil bekannt. Das Dokument DE 10 2011 005 811 A1 offenbart ein Mikroventil zur Kontrolle von Flüssigkeitsströmen in einem mikrofluidischen System mit einem regulierbaren Stössel.

### Vorteile der Erfindung

Das in dem Anspruch 1 definierte normal-geschlossene Ventil weist gegenüber herkömmlichen Lösungen den Vorteil auf, dass in der ersten Kammer eine dauerhafte Flüssiglagerung von Reagenzien nunmehr direkt auf dem Chip des LOCs möglich ist, da das Ventil in der Ausgangskonfiguration bzw. einem Grundzustand geschlossen ist. Die Ausbildung eines normal-geschlossenen Ventils zwischen den beiden Kammern sorgt in Verbindung mit der Abtrennung der beiden Kammern, das heißt mit Hilfe des fluidischen Sperrelements und der Verbindung von der Polymermembranfolie und dem fluidischen Sperrelement dafür, dass eine fluiddichte Lagerung von einem Reagenz in der ersten Kammer möglich ist. Die Verbindung der Polymermembranfolie mit dem fluidischen Sperrelement ist als eine stoffschlüssige Verbindung oder mittels Adhäsion realisiert. Zusätzlich dazu wird in Verbindung mit einer Wachsschicht auf der Polymermembranfolie, welche auf derjenigen Seite aufgebracht ist, welcher dem fluidischen Sperrelement entgegengesetzt ist, auch eine Kontamination des Reagenz durch die realisierte langzeitstabile fluiddichte Lagerung über die Dauer der Lagerung des LOCs bis zu dessen Einsatz verhindert. Des Weiteren ist nach dem ersten Öffnen des normal-geschlossenen Ventils in der Ausgangskonfiguration das Ventil durch eine erneute Aktuierung wieder verschließbar.

In vorteilhafter Weise erfolgt ein Trennen der Polymermembranfolie von dem Ventilsitz zur Freigabe der Substanz aus der ersten Kammer in die zweite Kammer lediglich unter der Einwirkung eines vorbestimmten Drucks, welcher in Abstimmung mit der gewählten Verbindung zwischen der Polymermembranfolie und dem Ventilsitz festgelegt wird.

Zusätzlich dazu kann bei dem vorliegenden normal-geschlossenen Ventil auf den Einsatz von Verpackungen der Reagenzien in Zusatzgefäßen (wie zum Beispiel in Blistern, Stickpacks, Metallbehältern) verzichtet werden, wodurch die Herstellung des LOCs vereinfacht und dessen Kosten verringert werden.

Für die Realisierung des erfindungsgemäßen normal-geschlossenen Ventils bietet die Verwendung eines polymeren Schichtaufbaus in Verbindung mit einer Polymermembranfolie oder einer Polymerfolie für das normal-geschlossene Ventil wesentliche Vorteile im Hinblick auf deren kostengünstige Herstellung. Die Polymermembranfolie kann zum Beispiel aus einem Elastomer, einem thermoplastischen Elastomer, Thermoplasten, einer Heißklebefolie oder TPE- Verbundfolien mit hohen Barriereeigenschaften gebildet sein. Die Dicke einer Polymermembranfolie eines normalen-geschlossenen Ventils kann zwischen 5 µm bis 300 µm betragen. Das Polymersubstrat kann aus Thermoplasten, wie zum Beispiel PC, PP, PE, PMMA, COP, COC gebildet sein. Die Dicke der jeweiligen Polymersubstrate kann zwischen 0,5 mm bis 5 mm betragen.

Gemäß einer weiteren Ausgestaltung des erfindungsgemäßen normal-geschlossenen Ventils ist die Verbindung der Polymermembranfolie mit dem fluidischen Sperrelement eine stoffschlüssige Verbindung. Als Beispiele für das Herstellen einer stoffschlüssigen Verbindung können Löten, Schweißen, Kleben genannt werden.

Gemäß einer weiteren Ausgestaltung des erfindungsgemäßen normal-geschlossenen Ventils ist die stoffschlüssige Verbindung der Polymermembranfolie mit dem fluidischen Sperrelement mit Hilfe einer Schweißverbindung der Polymermembranfolie mit dem fluidischen Sperrelement mit einer vorbestimmten Sollbruchkraft realisiert. Die Schweißverbindung ermöglicht es in vorteilhafter Weise zum einen, sich für das Verschließen des Ventils einen, beispielsweise laserbasierten, Schweißprozess zum Herstellen der Schweißverbindung zu Nutze zu machen, indem man die flexible Polymermembranfolie mit dem fluidischen Sperrelement, welches gleichzeitig den Ventilsitz realisiert, zwischen den zwei Kammern des Ventils durch Laserdurchstrahlschweißen verbindet. Somit ist das Ventil in einer Ausgangskonfiguration geschlossen und die notwendige fluidische Substanz kann fluiddicht in einer Kammer, welche als ein Reservoir dient, gelagert werden.

Die Haftfestigkeit zwischen dem Ventilsitz und der Polymermembranfolie darf aber lediglich so hoch sein, dass es noch möglich ist, durch das Anlegen eines vorbestimmten Drucks (zum Beispiel 10 - 1000kPa) oder einer ausreichend hohen Temperatur (beispielsweise 40 - 200°C) bzw. einer Kombination aus beidem, das Ventil zu öffnen. Dies wird durch eine entsprechende Wahl der Schweißparameter im laserbasierten Herstellungsprozess erreicht. Ziel des Schweißprozess ist es deshalb, auf der einen Seite eine fluidisch dichte Versiegelung der Schnittstelle zwischen der Polymermembranfolie und dem fluidischen Sperrelement zu realisieren. Auf der anderen Seite soll die Haftfestigkeit der Schweißverbindung möglichst niedrig sein, um die erforderliche Kraft zum Auftrennen der Schweißverbindung so gering wie möglich zu halten. Man kann in diesem Fall auch von einer sogenannten, instabilen Schweißnaht' sprechen. Des Weiteren weist diese Form der stoffschlüssigen Verbindung den Vorteil auf, dass keine zusätzlichen Fertigungs- und Prozessschritte für die Ausbildung der Schweißverbindung zwischen der Polymermembranfolie mit dem fluidischen Sperrelement notwendig sind.

An dieser Stelle soll beispielhaft ein möglicher Satz an Parametern zur Herstellung einer konventionellen, das heißt einer stabilen, Schweißnaht für einen laserbasierten Herstellungsprozess, hier insbesondere mittels Konturschweißen, angegeben werden. So wird als Prüfgeometrie eine zirkulare Kavität mit einer Tiefe von 400 µm und einem Durchmesser von 7,6 mm mittels Konturschweißen hergestellt. Der Laser besitzt eine Leistung von 700mW bei einem Laser-Spot-Durchmesser mit 400 µm und wird mit einem Vorschub von 20 mm/s bewegt. Die Prüfung der Schweißnaht erfolgt dann zum einen bei Raumtemperatur und zum anderen bei einer Temperatur von 95° C. So konnte ein Trennen der Schweißnaht bei Raumtemperatur bei einem Druck von mehr als 3 bar ermittelt werden, während die Schweißnaht bei 95° C bei einem Druck von 2,2 bar aufgetrennt wurde. Nun soll für dieselbe Prüfgeometrie ein möglicher Satz an Parametern zur Herstellung einer instabilen Schweißnaht für einen laserbasierten Herstellungsprozess, hier wiederum mittels Konturschweißen, angegeben werden. Der Laser besitzt eine Leistung von 300 mW bei einem Laser-Spot-Durchmesser mit 350 µm und wird mit einem Vorschub von 10 mm/s bewegt. Diesmal konnte ein Trennen der Schweißnaht bei Raumtemperatur bei einem Druck von 2 bar ermittelt werden, während die Schweißnaht bei 95° C bei einem Druck von nur noch 0,4 bar aufgetrennt wurde.

Gemäß einer weiteren Ausgestaltung des erfindungsgemäßen normal-geschlossenen Ventils ist die stoffschlüssige Verbindung der Polymermembranfolie mit dem fluidischen Sperrelement mit Hilfe einer Wachsschicht zwischen der Polymermembranfolie und dem fluidischen Sperrelement realisiert. Diese stoffschlüssige Verbindung stellt eine Alternative zur vorstehend erwähnten, instabile Schweißnaht' dar, bei welcher die stoffschlüssige Verbindung zwischen der Polymermembranfolie und dem fluidischen Sperrelement durch eine sog. 'Wachsklebung' realisiert wird. Hierfür kann beispielsweise Paraffin als Fügemittel zwischen dem fluidischen Sperrelement und der Polymermembranfolie verwendet werden. Das Paraffin wird im Herstellungsprozess auf das fluidische Sperrelement aufgetragen (zum Beispiel durch Tampondruck, Dispensieren oder ähnliches), was nach einer entsprechenden Erwärmung und Abkühlung zu einer Verschließung des Ventils führt. Auf jeden Fall muss ein Kontakt zwischen dem fluidischen Sperrelement und der Polymermembranfolie sichergestellt werden. Die Schmelztemperaturen von Paraffin sind variabel und können je nach Bedarf durch eine entsprechende Auswahl des Paraffins (Hart- oder Weichparaffin) angepasst werden, was die reproduzierbare Öffnung des vorliegenden normal-geschlossenen Ventils bei einer vorbestimmten (Öffnungs) Temperatur erleichtert. Zudem können sich unterschiedliche Ventile auf einem LOC bei Verwendung von Paraffinen mit unterschiedlichen Schmelzpunkten bei unterschiedlichen Temperaturen öffnen, wodurch einzeln aktuierbare Ventile in der gleichen Heizzone realisiert werden können. Des Weiteren sind zahlreiche Materialkombinationen der Ventilsysteme bei gleichzeitig guten Barriereeigenschaften durch Paraffinversiegelung möglich.

Die stoffschlüssige Verbindung in der Art einer 'Wachsklebung' hat den Vorteil, dass die Barrierewirkung zwischen dem fluidischen Sperrelement und der Polymermembranfolie im Vergleich zu der 'instabilen Schweißnaht' aufgrund der Paraffinsiegelung höher ist.

Gemäß einer weiteren Ausgestaltung des erfindungsgemäßen normal-geschlossenen Ventils ist in der Ausgangskonfiguration die Polymermembranfolie auf der dem fluidischen Sperrelement gegenüber liegenden Seite im Bereich des fluidischen Sperrelements mit einer zweiten Wachsschicht einer vorbestimmten Dicke überzogen. Da es sich bei der Polymermembranfolie für gewöhnlich um, zum Beispiel eine thermoplastische Elastomerfolie handelt, die permeabel gegenüber typischerweise verwendeten fluidischen Substanzen (wie zum Beispiel Alkohole, Lösemittel, wässrige Lösungen, Salzlösungen, Pufferlösungen, usw.) ist, ist es für vorgesehene längere Lagerungszeiten (Wochen, Monate, Jahre) erstrebenswert, deren Barriereeigenschaften zu erhöhen. Dies wird durch einen Verbund der Polymermembranfolie mit einer Barriereschicht (wie zum Beispiel einer Paraffinschicht) erreicht, wodurch die Polymermembranfolie impermeabel für die Substanz in der ersten Kammer ist. Dazu wird das Paraffin während des Herstellungsprozesses auf der zur ersten Kammer abgewandten Seite auf die Polymermembranfolie aufgebracht und erwärmt, so dass sich das geschmolzene Paraffin zunächst gleichmäßig auf der Polymermembranfolie verteilt, und nach dem Abkühlen eine Schicht auf der Polymermembranfolie bildet. Des Weiteren ist Paraffin in vorteilhafterweise biokompatibel und für die meisten biomedizinischen bzw. diagnostischen Anwendungen unbedenklich.

Gemäß einer weiteren Ausgestaltung des erfindungsgemäßen normal-geschlossenen Ventils ist das fluidische Sperrelement als ein Steg ausgebildet und bildet den Ventilsitz des normal-geschlossenen Ventils. Gemäß dieser Bauform ergibt sich eine minimale Leitungslänge für die Verbindung zwischen den beiden Kammern des Ventils, nämlich die Breite des Stegs, wodurch sich in vorteilhafterweise ein geringes Totvolumen für diesen Verbindungskanal ergibt.

Gemäß einer weiteren Ausgestaltung des erfindungsgemäßen normal-geschlossenen Ventils erfolgt die Überführung der Substanz aus der ersten Kammer in die zweite Kammer zusätzlich durch das Erwärmen der Schnittstelle zwischen der Polymermembranfolie mit dem fluidischen Sperrelement, wobei die eingebrachte Wärme derart gewählt ist, dass die stoffschlüssige Verbindung der Polymermembranfolie mit dem fluidischen Sperrelement getrennt wird. Hierbei wird die Schnittstelle zwischen der Polymermembranfolie mit dem fluidischen Sperrelement auf eine vorbestimmte Temperatur erwärmt, bei welcher die stoffschlüssige Verbindung der Polymermembranfolie mit dem fluidischen Sperrelement, zum Beispiel vorzugsweise als eine Schicht aus Wachs realisiert, getrennt wird. Zum Öffnen einer solchen sogenannten 'thermisch instabilen Klebung' muss ein Temperaturschwellwert (nahe oder höher dem Erweichungs- bzw. Schmelzpunkt des Materials für die stoffschlüssige Verbindung zwischen der Polymermembranfolie mit dem fluidischen Sperrelement, typischerweise 20-100°C) bei einer entsprechenden Druckdifferenz (beispielsweise 10 - 1000kPa) zwischen den Kavitäten (hier der ersten Kammer und der Ausnehmung) überschritten werden, bei der sich das Paraffin teilweise oder ganz verflüssigt und sich das Ventil auf diese Weise öffnet. Vorteilhaft ist hierbei die Verwendung von Paraffin mit einem definierten Schmelzpunkt für eine reproduzierbare Öffnung des Ventils.

In einer alternativen Ausführungsform kann für das normal-geschlossene Ventil sowohl eine 'instabile Schweißnaht' als auch eine 'Wachsklebung' für die stoffschlüssige Verbindung zwischen der Polymermembranfolie mit dem fluidischen Sperrelement realisiert sein, wobei die Trennung der Polymermembranfolie von dem fluidischen Sperrelement beim Freisetzen der Substanz aus der ersten Kammer durch eine Kombination aus dem vorstehend beschriebenen Druckaufbau und der Erwärmung der Wachsschicht erfolgt.

Gemäß einer weiteren Ausgestaltung des erfindungsgemäßen normal-geschlossenen Ventils ist die erste Wachsschicht und/oder die zweite Wachsschicht aus Paraffin gebildet. Hierbei macht man sich den Umstand zu Nutze, dass Paraffin biokompatibel und somit für die meisten biomedizinischen bzw. diagnostischen Anwendungen unbedenklich ist. Auf diese Weise ist bei der Verwendung von Paraffin ein breites Anwendungsspektrum für das erfindungsgemäße normal-geschlossene Ventil möglich, während es in vorteilhafter Weise gleichzeitig eine langfristige Lagerung von flüssigen Substanzen in dem LOC ermöglicht.

Des Weiteren wird ein Verfahren zum Betreiben eines normal-geschlossenen Ventils beansprucht, welches ein Polymersubstrat, sowie eine Polymermembranfolie aufweist, welche an dem Polymersubstrat angeordnet ist, wobei das Polymersubstrat eine erste Kammer, eine zweite Kammer und ein fluidisches Sperrelement aufweist, und das fluidische Sperrelement die erste Kammer von der zweiten Kammer trennt, wobei die erste Kammer mit der zweiten Kammer über die Polymermembranfolie fluidisch gekoppelt ist und die erste Kammer in der Ausgangskonfiguration zumindest teilweise mit einer Substanz gefüllt ist, aufweisend die Schritte des Verhinderns in einer Ausgangskonfiguration einer fluidischen Kommunikation der ersten Kammer mit der zweiten Kammer mit Hilfe einer Verbindung der Polymermembranfolie mit dem fluidischen Sperrelement und das Überführen der Substanz aus der ersten Kammer in die zweite Kammer durch das Anlegen eines Drucks auf die Substanz, welcher so groß gewählt ist, dass die Verbindung der Polymermembranfolie mit dem fluidischen Sperrelement getrennt wird.

Das beanspruchte Verfahren weist den Vorteil auf, dass bei dem vorliegenden Ventil aufgrund des (stoffschlüssigen) Verbindens der Polymermembranfolie mit dem fluidischen Sperrelement im geschlossenen Zustand die Polymermembranfolie die beiden Kammern zuverlässig voneinander abtrennt. Aufgrund dieser Vereinfachung in der Funktionsweise des erfindungsgemäßen normal-geschlossenen Ventils ergeben sich für das LOC niedrigere Kosten sowie eine erhöhte Zuverlässigkeit.

Die benötigten Strukturen in den Polymersubstraten bzw. der Polymermembranfolie können beispielsweise durch Fräsen, Spritzguss, Heißprägen, Stanzen oder Laserstrukturierung hergestellt werden.

### Kurze Beschreibung der Zeichnungen

Die vorliegende Erfindung wird anhand der beiliegenden Zeichnungen erklärt. Es zeigt dabei
Figs. 1 bis 6: jeweils eine Schnittansicht von der Seite einzelner Fertigungsstufen für die Herstellung eines erfindungsgemäßen normal-geschlossenes Ventils für mikrofluidische Bauteile aus einem polymeren Schichtsystem gemäß einer ersten Ausführungsform der vorliegenden Erfindung,
Figs. 7 bis 11: jeweils eine Schnittansicht von der Seite einzelner Fertigungsstufen für die Herstellung eines erfindungsgemäßen normal-geschlossenes Ventils für mikrofluidische Bauteile aus einem polymeren Schichtsystem gemäß einer zweiten Ausführungsform der vorliegenden Erfindung,
Fig. 12: eine Schnittansicht von der Seite zur Veranschaulichung einer ersten Funktionsweise für eine Reagenzienfreisetzung in einem erfindungsgemäßen normal-geschlossenen Ventil für mikrofluidische Bauteile aus einem polymeren Schichtsystem, und
Fig. 13: eine Schnittansicht von der Seite zur Veranschaulichung einer zweiten Funktionsweise für eine Reagenzienfreisetzung in einem erfindungsgemäßen normal-geschlossenen Ventil für mikrofluidische Bauteile aus einem polymeren Schichtsystem.

### Ausführungsformen der Erfindung

Unter einem (Zulauf)kanal soll eine Struktur verstanden werden, welche eine röhrenartige Verbindung realisiert, und kann zum Beispiel als ein (mikrofluidischer) Strömungskanal in einem Schichtaufbau oder als eine separate Leitung, zum Beispiel in der Art eines Schlauchs oder eines Röhrchens, ausgebildet sein.

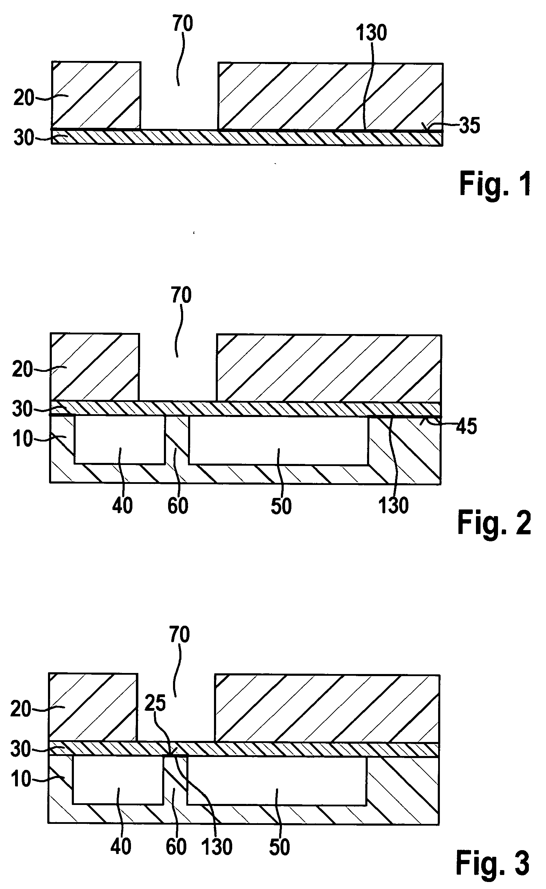

Figs. 1 bis 6 zeigen jeweils eine Schnittansicht von der Seite einzelner Fertigungsstufen für die Herstellung eines erfindungsgemäßen normal-geschlossenes Ventils 200 für mikrofluidische Bauteile aus einem polymeren Schichtsystem gemäß einer ersten Ausführungsform der vorliegenden Erfindung.

Diese und die nachfolgend beschriebene Ausführungsform weisen vorzugsweise laterale Abmessungen von 10 x 10 mm² bis 200 x 200 mm² für das normal-geschlossene Ventil auf.

Fig. 1 zeigt den Schritt des Verbindens eines oberen Polymersubstrats 20 mit einer Polymermembranfolie 30 mit Hilfe eines laserbasierten Schweißverfahrens. Hierzu wird ein Laserstrahl 130 über eine Kontaktfläche 35 zwischen dem oberen Polymersubstrat 20 und der Polymermembranfolie 30 geführt und je nach Anwendungsfall wird die gesamte Kontaktfläche 35 oder nur Teile davon von dem Laserstrahl 130 aufgeschmolzen, so dass eine stoffschlüssige Verbindung zwischen dem oberen Polymersubstrat 20 und der Polymermembranfolie 30 entsteht. Das obere Polymersubstrat 20 weist eine Ausnehmung 70 auf, deren Funktion weiter unten beschrieben werden wird.

Fig. 2 zeigt den Schritt des Verbindens eines unteren Polymersubstrats 10 mit der Polymermembranfolie 30 mit Hilfe eines laserbasierten Schweißverfahrens. Hierzu wird der Laserstrahl 130 über eine Kontaktfläche 45 zwischen dem unteren Polymersubstrat 10 und der Polymermembranfolie 30 geführt und je nach Anwendungsfall wird die gesamte Kontaktfläche 45 oder nur Teile davon von dem Laserstrahl 130 aufgeschmolzen, so dass eine stoffschlüssige Verbindung zwischen dem unteren Polymersubstrat 10 und der Polymermembranfolie 30 entsteht.

Das untere Polymersubstrat 10 weist eine erste Kammer 40 und eine zweite Kammer 50 auf, die von einem fluidischen Sperrelement 60 in der Form eines Stegs voneinander getrennt sind, wobei der Steg als Ventilsitz dient.

Fig. 3 zeigt den Schritt des Verbindens des Ventilsitzes mit der Polymermembranfolie 30 mit Hilfe eines laserbasierten Schweißverfahrens, vorzugsweise mittels Laserdurchstrahlschweißen. Hierbei wird der Laserstrahl 130 über eine Kontaktfläche 25 zwischen dem Ventilsitz und der Polymermembranfolie 30 geführt und je nach Anwendungsfall wird die gesamte Kontaktfläche 25 oder nur Teile davon von dem Laserstrahl 130 aufgeschmolzen, so dass eine stoffschlüssige Verbindung zwischen dem Ventilsitz und der Polymermembranfolie 30 entsteht. Somit ist das Ventil geschlossen und notwendige Flüssigkeiten (nicht dargestellt) können fluiddicht in einem Reservoir, wie zum Beispiel der ersten Kammer 40, gelagert werden. Die Haftfestigkeit zwischen Ventilsitz und Polymermembranfolie 30 darf aber nur so hoch sein, dass es möglich ist durch das Anlegen eines ausreichend hohen Druckes (zum Beispiel 10 - 1000kPa) das Ventil wieder zu öffnen. Dies wird durch die entsprechende Wahl der Schweißparameter im laserbasierten Herstellungsprozess erreicht. Man kann in diesem Fall auch von einer sogenannten 'instabilen Schweißnaht' sprechen.

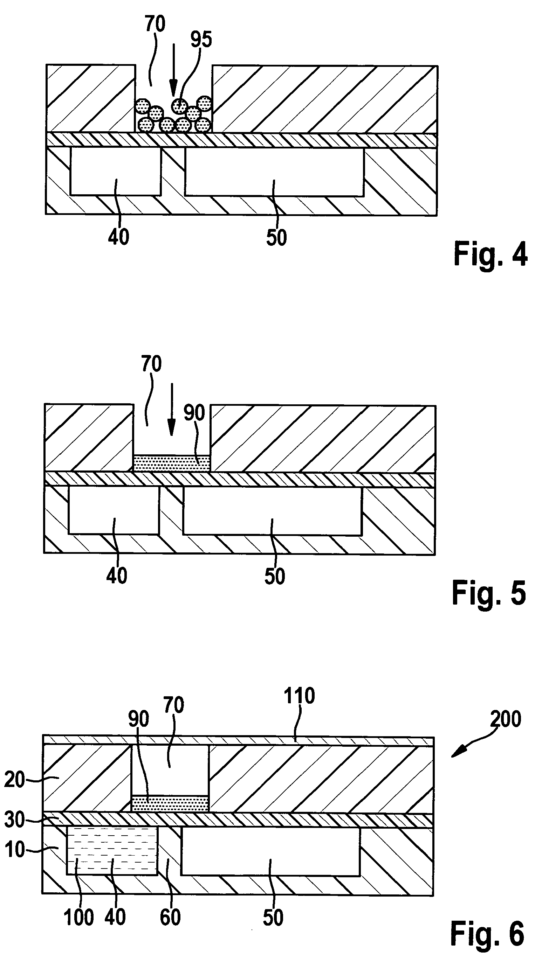

Fig. 4 zeigt den Schritt des Einfüllens von Paraffinkügelchen 95 auf der Oberseite von der Polymermembranfolie 30. Da es sich bei der Polymermembranfolie 30 für gewöhnlich um thermoplastische Elastomerfolien handelt, die permeabel gegenüber typischerweise verwendeten Fluiden (Alkohole, Lösemittel, wässrige Lösungen, Salzlösungen, Pufferlösungen, usw.) sind, ist es für längere Lagerungszeiten (Wochen, Monate, Jahre) sinnvoll, ihre Barriereeigenschaften zu erhöhen. Dies wird durch einen Verbund der Polymermembranfolie 30 mit einer Barriereschicht (beispielsweise einer Paraffinschicht) erreicht. Dazu muss das Paraffin während des Herstellungsprozesses auf der zum Reservoir abgewandten Seite auf die Polymermembranfolie 30 aufgebracht und erwärmt werden.

Hierzu werden in die Ausnehmung 70 des oberen Polymersubstrats 20 Paraffinkügelchen 95 eingefüllt, und zwar eine solche Menge, dass die Oberfläche der Polymermembranfolie 30 von diesen bedeckt ist.

Fig. 5 zeigt den Schritt des Erwärmens und Abkühlens der Paraffinkügelchen auf der Polymermembranfolie 30 zur Ausbildung einer Wachsschicht 90 auf der Polymermembranfolie 30. Dazu wird die Umgebungstemperatur auf eine Temperatur oberhalb der Schmelztemperatur des eingesetzten Paraffins, zum Beispiel 50°C, erhöht, wodurch es zu einem Aufschmelzen der Paraffinkügelchen kommt. Das aufgeschmolzene Paraffin kann sich nun gleichmäßig auf der Polymermembranfolie 30 verteilen, was zu einer Versiegelung der Polymermembranfolie 30 führt. Damit wird die Barriereeigenschaft der Polymermembranfolie 30 erheblich verbessert, was für die Lagerung von Flüssigkeiten in der ersten Kammer 40 von Vorteil ist.

Fig. 6 zeigt den Schritt des Füllens der ersten Kammer 40 und Verschließens der Ausnehmung 70. Vor der Inbetriebnahme des LOC wird die erste Kammer 40 des normal-geschlossenen Ventils 200 mit einer Substanz 100 gefüllt, welche zu einem gewünschten Zeitpunkt in die zweite Kammer 50 überführt werden soll, wobei die zweite Kammer 50 ein Teil eines fluidischen Systems ist. Auf die obere Oberfläche von dem oberen Polymersubstrat 20 wird eine Versiegelung 110 aufgebracht, wodurch die Ausnehmung 70 des oberen Polymersubstrats 20 eine Kammer bildet.

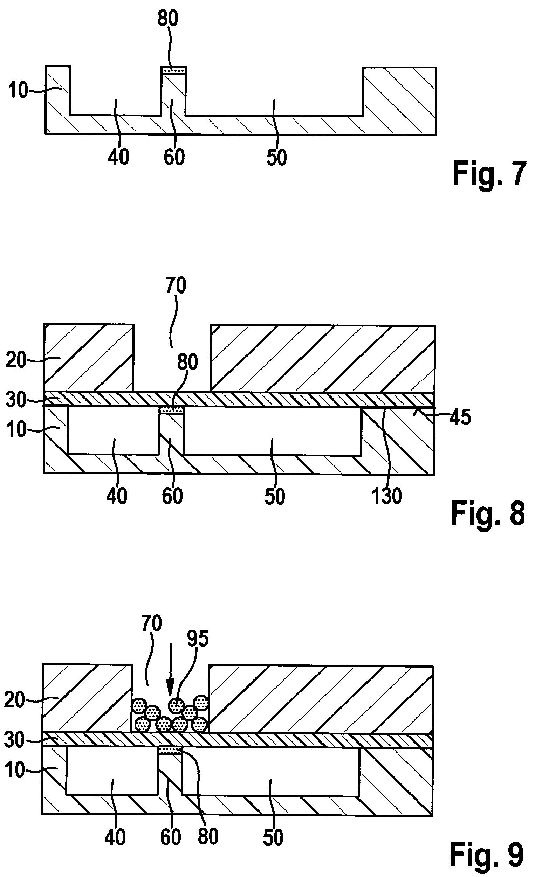

Figs. 7 bis 11 zeigen jeweils eine Schnittansicht von der Seite einzelner Fertigungsstufen für die Herstellung eines erfindungsgemäßen normal-geschlossenes Ventils für mikrofluidische Bauteile aus einem polymeren Schichtsystem gemäß einer zweiten Ausführungsform der vorliegenden Erfindung.

Nicht dargestellt ist für diese zweite Ausführungsform der erste Schritt des Verbindens des oberen Polymersubstrats 20 mit der Polymermembranfolie 30 mit Hilfe eines laserbasierten Schweißverfahrens, welcher mit demjenigen gemäß Fig. 1 der ersten Ausführungsform identisch ist, und somit dessen Beschreibung weggelassen wurde.

Fig. 7 zeigt den Schritt des Auftragens von Paraffin auf einen Ventilsitz im unteren Polymersubstrat 10. Hierbei wird auf das freie Ende des Ventilsitzes bzw. des Stegs 60 das Paraffin im Herstellungsprozess (zum Beispiel durch Tampondruck, Dispensieren oder ähnliches) aufgetragen, was nach entsprechender Erwärmung und Abkühlung zu einer ersten Wachsschicht 80 auf dem Ventilsitz führt.

Fig. 8 zeigt den Schritt des Verbindens eines unteren Polymersubstrats 10 mit der Polymermembranfolie 30 mit Hilfe eines laserbasierten Schweißverfahrens. Hierzu wird der Laserstrahl 130 über eine Kontaktfläche 45 zwischen dem unteren Polymersubstrat 10 und der Polymermembranfolie 30 geführt und je nach Anwendungsfall wird die gesamte Kontaktfläche 45 oder nur Teile davon von dem Laserstrahl 130 aufgeschmolzen, so dass eine stoffschlüssige Verbindung zwischen dem unteren Polymersubstrat 10 und der Polymermembranfolie 30 entsteht.

Das untere Polymersubstrat 10 weist eine erste Kammer 40 und eine zweite Kammer 50 auf.

Fig. 9 zeigt den Schritt des Einfüllens von Paraffinkügelchen 95 auf der Oberseite von der Polymermembranfolie 30. Hierzu werden in die Ausnehmung 70 des oberen Polymersubstrats 20 Paraffinkügelchen 95 eingefüllt, und zwar eine solche Menge, dass die Oberfläche der Polymermembranfolie 30 von diesen bedeckt ist.

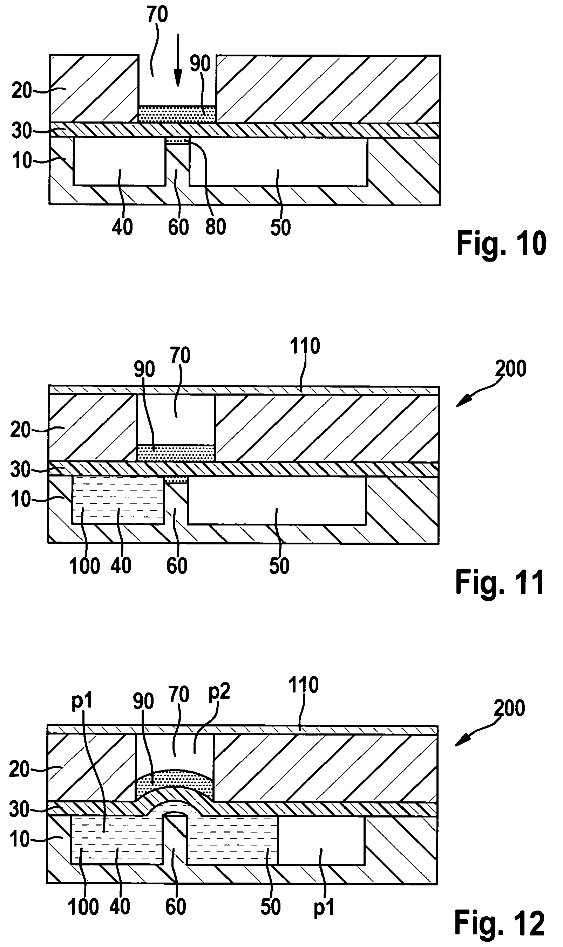

Fig. 10 zeigt den Schritt des Erwärmens und Abkühlens der Paraffinkügelchen auf der Polymermembranfolie 30 zur Ausbildung einer zweiten Wachsschicht 90 auf der Oberseite der Polymermembranfolie 30. Dieser Schritt ist im Wesentlichen identisch mit dem entsprechenden Schritt der ersten Ausführungsform gemäß Fig. 5, weshalb an dieser Stelle auf die zugehörigen Ausführungen verwiesen wird.

Zusätzlich dazu muss für die Ausgangskonfiguration in diesem Prozessschritt auf alle Fälle ein Kontakt zwischen dem Ventilsitz und der Polymermembranfolie 30 sichergestellt werden, zum Beispiel über das erneute Erwärmen der Wachsschicht 80, wobei diese vollständig oder teilweise schmilzt, um auf diese Weise nach dem Abkühlen der Wachsschicht 80 eine stoffschlüssige Verbindung mit der Polymermembranfolie 30 zu bilden.

Fig. 11 zeigt wiederum den Schritt des Füllens der ersten Kammer 40 und Verschließens der Ausnehmung 70. Vor der Inbetriebnahme des LOC wird die erste Kammer 40 des normal-geschlossenen Ventils 200 mit einer Substanz 100 gefüllt, welche zu einem gewünschten Zeitpunkt in die zweite Kammer 50 überführt werden soll, wobei die zweite Kammer 50 ein Teil eines fluidischen Systems ist. Auf die obere Oberfläche von dem oberen Polymersubstrat 20 wird eine Versiegelung 110 aufgebracht, wodurch die Ausnehmung 70 des oberen Polymersubstrats 20 eine Kammer bildet.

Zum Öffnen dieser sogenannten 'thermisch instabilen Klebung' muss ein vorbestimmter Temperaturschwellwert, welcher nahe oder höher des Erweichungs- bzw. Schmelzpunktes von dem Material der ersten Wachsschicht 80 ist (hier Paraffin, typischerweise 20-100°C), bei einer entsprechenden Druckdifferenz (z.B. 10 - 1000kPa) zwischen den beiden Kammern 40 und 70, überschritten werden, bei der sich das Paraffin teilweise oder ganz verflüssigt und sich somit das normal-geschlossene Ventil 200 öffnet.

Fig. 12 zeigt eine Schnittansicht von der Seite zur Veranschaulichung einer ersten Funktionsweise für eine Reagenzienfreisetzung in einem erfindungsgemäßen normal-geschlossenen Ventil 200 für mikrofluidische Bauteile aus einem polymeren Schichtsystem.

Das normal-geschlossene Ventil 200 für mikrofluidische Bauteile aus einem polymeren Schichtsystem weist wiederum ein unteres Polymersubstrat 10, ein oberes Polymersubstrat 20, sowie eine Polymermembranfolie 30 auf, welche zwischenliegend zwischen dem unteren Polymersubstrat 10 und dem oberen Polymersubstrat 20 angeordnet ist. Das untere Polymersubstrat 10 weist eine erste Kammer 40, eine zweite Kammer 50 und ein fluidisches Sperrelement 60 in der Form eines Stegs auf, wobei das fluidische Sperrelement 60 die erste Kammer 40 von der zweiten Kammer 50 trennt. Die erste Kammer 40 ist mit der zweiten Kammer 50 über die Polymermembranfolie 30 fluidisch gekoppelt, und in einer Ausgangskonfiguration verhindert eine stoffschlüssige Verbindung der Polymermembranfolie 30 mit dem fluidischen Sperrelement 60 eine fluidische Kommunikation der ersten Kammer 40 mit der zweiten Kammer 50. Oberhalb des zweiten Polymersubstrats 20 ist eine Versiegelung 110 aufgebracht.

Das obere Polymersubstrat 20 weist im Bereich des fluidischen Sperrelements 60 eine Ausnehmung 70 auf, in welche sich die Polymermembranfolie 30 im Betrieb erstreckt. Die Polymermembranfolie 30 ist auf Seiten der Ausnehmung 70 mit einer Wachsschicht 90 einer vorbestimmten Dicke überzogen.

Die stoffschlüssige Verbindung der Polymermembranfolie 30 mit dem fluidischen Sperrelement 60 ist hier über die 'instabile Schweißnaht' realisiert.

Der Öffnungsmechanismus des normal-geschlossenen Ventils 200 erfolgt durch die Überhöhung eines Druckschwellwerts zwischen der ersten Kammer 40 und der Ausnehmung 70. Prinzipiell kann die Freisetzung der Reagenz bzw. der Substanz 100 von der ersten Kammer 40 in die zweite Kammer 50 durch Druck oder Unterdruck realisiert werden. Dabei weist die Ausnehmung 70 in der Ausgangskonfiguration einen Druck p2 auf, während in der ersten Kammer 40 ein Druck p1 anliegt, der im Wesentlichen dem Druck p2 entspricht. Soll nun die Substanz 100 freigesetzt werden, so wird der Druck p1 erhöht, und zwar auf einen vorbestimmten Wert, bei dem die stoffschlüssige Verbindung der Polymermembranfolie 30 mit dem fluidischen Sperrelement 60 aufgehoben wird. Unter der Wirkung des ansteigenden Drucks p1 verformt sich die Polymermembranfolie 30 zusammen mit der Wachsschicht 90 in Richtung zu der Ausnehmung 70 hin. Auf diese Weise kann die Substanz 100 von der ersten Kammer 40 in die zweite Kammer 50 über den Steg fließen, wodurch die Substanz 100 in dem LOC (nicht dargestellt) für die vorgesehenen Prozessschritte zur Verfügung steht.

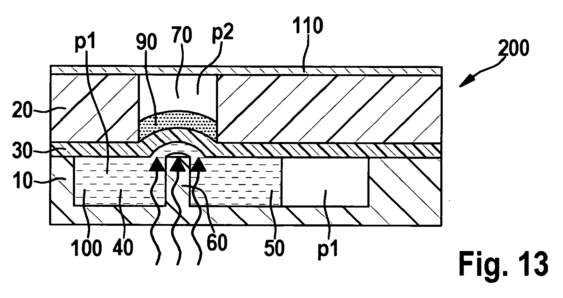

Fig. 13 zeigt eine Schnittansicht von der Seite zur Veranschaulichung einer zweiten Funktionsweise für eine Reagenzienfreisetzung in einem erfindungsgemäßen normal-geschlossenen Ventil 200 für mikrofluidische Bauteile aus einem polymeren Schichtsystem.

Der Aufbau des normal-geschlossenen Ventils 200 ist im Wesentlichen mit der vorstehend beschriebenen Konfiguration gemäß der ersten Funktionsweise für die Reagenzienfreisetzung identisch, allerdings mit dem Unterschied, dass bei der zweiten Funktionsweise die stoffschlüssige Verbindung der Polymermembranfolie 30 mit dem fluidischen Sperrelement 60 über die 'thermisch instabilen Klebung' realisiert ist.

Der Öffnungsmechanismus des normal-geschlossenen Ventils 200 erfolgt durch die Überhöhung eines Temperaturschwellwerts in Verbindung mit der Verwendung von Druck. Somit wird hier die Freisetzung der Reagenz bzw. der Substanz 100 von der ersten Kammer 40 in die zweite Kammer 50 über eine Veränderung der Temperatur im Bereich der Schnittstelle der Polymermembranfolie 30 mit dem fluidischen Sperrelement 60 realisiert.

Die Freisetzung der Substanz 100 erfolgt aus der Ausgangskonfiguration durch die Einbringung von Wärme (hier durch Pfeile dargestellt) in die stoffschlüssige Verbindung der Polymermembranfolie 30 mit dem fluidischen Sperrelement 60, wodurch eine erste Wachsschicht (nicht dargestellt) zwischen der Polymermembranfolie 30 und dem fluidischen Sperrelement 60 bis auf eine vorbestimmte Temperatur erwärmt wird, bei welcher das Wachs (an)schmilzt und auf diese Weise die stoffschlüssige Verbindung aufgehoben wird.

Nach der Trennung der stoffschlüssigen Verbindung erfolgt das Überführen der Substanz 100 in die zweite Kammer 50 ebenfalls mit Hilfe von Druck (siehe hierzu die entsprechenden Ausführungen von Fig. 12). Unter der Wirkung des ansteigenden Drucks p1 verformt sich die Polymermembranfolie 30 zusammen mit der Wachsschicht 90 in Richtung zu der Ausnehmung 70 hin. Auf diese Weise kann die Substanz 100 von der ersten Kammer 40 in die zweite Kammer 50 über den Steg fließen, wodurch die Substanz 100 in dem LOC für die vorgesehenen Prozessschritte zur Verfügung steht.

Je nach Anwendungsfall können auf dem LOC Ventile mit unterschiedlichen Funktionsweisen vorgesehen sein.

## Patentansprüche

1. Normal-geschlossenes Ventil (200) für mikrofluidische Bauteile, insbesondere aus einem polymeren Schichtsystem, mit
einem Polymersubstrat (10),
einer Polymermembranfolie (30), welche an dem Polymersubstrat (10) angeordnet ist,
wobei das Polymersubstrat (10) eine erste Kammer (40), eine zweite Kammer (50) und ein fluidisches Sperrelement (60) aufweist, und das fluidische Sperrelement (60) die erste Kammer (40) von der zweiten Kammer (50) trennt, wobei das fluidische Sperrelement (60) als ein Steg ausgebildet ist und den Ventilsitz des normal-geschlossenen Ventils bildet und
wobei die erste Kammer (40) mit der zweiten Kammer (50) über die Polymermembranfolie (30) fluidisch gekoppelt ist, **dadurch gekennzeichnet, dass**
in einer Ausgangskonfiguration eine Verbindung der Polymermembranfolie (30) mit dem fluidischen Sperrelement (60) eine fluidische Kommunikation der ersten Kammer (40) mit der zweiten Kammer (50) verhindert,
die erste Kammer (40) in der Ausgangskonfiguration zumindest teilweise mit einer Substanz (100) gefüllt ist, und eine Überführung der Substanz (100) aus der ersten Kammer (40) in die zweite Kammer (50) durch das Anlegen eines Drucks auf die Substanz (100) erfolgt, welcher so groß gewählt ist, dass die Verbindung der Polymermembranfolie (30) mit dem fluidischen Sperrelement (60) getrennt wird, und die Verbindung der Polymermembranfolie (30) mit dem fluidischen Sperrelement (60) eine stoffschlüssige Verbindung ist.

2. Normal-geschlossenes Ventil nach Anspruch 1, **dadurch gekennzeichnet, dass** die stoffschlüssige Verbindung der Polymermembranfolie (30) mit dem fluidischen Sperrelement (60) mit Hilfe einer Schweißverbindung der Polymermembranfolie (30) mit dem fluidischen Sperrelement (60) mit einer vorbestimmten Sollbruchkraft realisiert ist.

3. Normal-geschlossenes Ventil nach Anspruch 1, **dadurch gekennzeichnet, dass** die stoffschlüssige Verbindung der Polymermembranfolie (30) mit dem fluidischen Sperrelement (60) mit Hilfe einer Wachsschicht (80) zwischen der Polymermembranfolie (30) und dem fluidischen Sperrelement (60) realisiert ist.

4. Normal-geschlossenes Ventil nach einem der Ansprüche 1 bis 3, **dadurch gekennzeichnet, dass** in der Ausgangskonfiguration die Polymermembranfolie (30) auf der dem fluidischen Sperrelement (60) gegenüber liegenden Seite im Bereich des fluidischen Sperrelements (60) mit einer zweiten Wachsschicht (90) einer vorbestimmten Dicke überzogen ist.

5. Normal-geschlossenes Ventil nach einem der Ansprüche 1 bis 4, **dadurch gekennzeichnet, dass** die Überführung der Substanz (100) aus der ersten Kammer (40) in die zweite Kammer (50) zusätzlich durch das Erwärmen der Schnittstelle zwischen der Polymermembranfolie (30) mit dem fluidischen Sperrelement (60) erfolgt, wobei die eingebrachte Wärme derart gewählt ist, dass die Verbindung der Polymermembranfolie (30) mit dem fluidischen Sperrelement (60) getrennt wird.

6. Normal-geschlossenes Ventil nach Anspruch 3 oder 4, **dadurch gekennzeichnet, dass** die erste Wachsschicht (80) und/oder die zweite Wachsschicht (90) aus Paraffin gebildet ist.

7. Verfahren zum Betreiben eines normal-geschlossenen Ventils (200), mit einem Polymersubstrat (10),
einer Polymermembranfolie (30), welche an dem Polymersubstrat (10) angeordnet ist,
wobei das Polymersubstrat (10) eine erste Kammer (40), eine zweite Kammer (50) und ein fluidisches Sperrelement (60) aufweist, und das fluidische Sperrelement (60) die erste Kammer (40) von der zweiten Kammer (50) trennt und wobei das fluidische Sperrelement (60) als ein Steg ausgebildet ist und den Ventilsitz des normal-geschlossenen Ventils bildet,
wobei die erste Kammer (40) mit der zweiten Kammer (50) über die Polymermembranfolie (30) fluidisch gekoppelt ist, und die erste Kammer (40) in der Ausgangskonfiguration zumindest teilweise mit einer Substanz (100) gefüllt ist, **gekennzeichnet durch** die Schritte des
Verhinderns in einer Ausgangskonfiguration einer fluidischen Kommunikation der ersten Kammer (40) mit der zweiten Kammer (50) mit Hilfe einer stoffschlüssigen Verbindung der Polymermembranfolie (30) mit dem fluidischen Sperrelement (60),
Überführen der Substanz (100) aus der ersten Kammer (40) in die zweite Kammer (50) **durch** das Anlegen eines Drucks auf die Substanz (100), welcher so groß gewählt ist, dass die Verbindung der Polymermembranfolie (30) mit dem fluidischen Sperrelement (60) getrennt wird.

## Claims

1. Normally closed valve (200) for microfluidic components, in particular of a polymeric layer system, comprising
a polymer substrate (10),
a polymer membrane film (30), which is arranged on the polymer substrate (10),
the polymer substrate (10) having a first chamber (40), a second chamber (50) and a fluidic barrier element (60), and the fluidic barrier element (60) separating the first chamber (40) from the second chamber (50), the fluidic barrier element (60) being formed as a web and forming the valve seat of the normally closed valve, and
the first chamber (40) being fluidically coupled to the second chamber (50) by way of the polymer membrane film (30), **characterized in that** in an initial configuration a connection of the polymer membrane film (30) to the fluidic barrier element (60) prevents a fluidic communication of the first chamber (40) to the second chamber (50), the first chamber (40) is at least partially filled with a substance (100) in the initial configuration, and a transfer of the substance (100) from the first chamber (40) into the second chamber (50) takes place by applying to the substance (100) a pressure that is chosen to be great enough that the connection of the polymer membrane film (30) to the fluidic barrier element (60) is disconnected, and
the connection of the polymer membrane film (30) to the fluidic barrier element (60) is a material-bonded connection.

2. Normally closed valve according to Claim 1, **characterized in that** the material-bonded connection of the polymer membrane film (30) to the fluidic barrier element (60) is realized with the aid of a welded connection of the polymer membrane film (30) to the fluidic barrier element (60) with a predetermined intended breaking resistance.

3. Normally closed valve according to Claim 1, **characterized in that** the material-bonded connection of the polymer membrane film (30) to the fluidic barrier element (60) is realized with the aid of a wax layer (80) between the polymer membrane film (30) and the fluidic barrier element (60).

4. Normally closed valve according to one of Claims 1 to 3, **characterized in that** in the initial configuration the polymer membrane film (30) is coated on the side lying opposite from the fluidic barrier element (60) with a second wax layer (90) of a predetermined thickness in the region of the fluidic barrier element (60).

5. Normally closed valve according to one of Claims 1 to 4, **characterized in that** the transfer of the substance (100) from the first chamber (40) into the second chamber (50) additionally takes place by the heating of the interface between the polymer membrane film (30) and the fluidic barrier element (60), the heat that is introduced being chosen such that the connection of the polymer membrane film (30) to the fluidic barrier element (60) is disconnected.

6. Normally closed valve according to Claim 3 or 4, **characterized in that** the first wax layer (80) and/or the second wax layer (90) is formed from paraffin.

7. Method for operating a normally closed valve (200), comprising
a polymer substrate (10),
a polymer membrane film (30), which is arranged on the polymer substrate (10),
the polymer substrate (10) having a first chamber (40), a second chamber (50) and a fluidic barrier element (60), and the fluidic barrier element (60) separating the first chamber (40) from the second chamber (50), and the fluidic barrier element (60) being formed as a web and forming the valve seat of the normally closed valve,
the first chamber (40) being fluidically coupled to the second chamber (50) by way of the polymer membrane film (30), and the first chamber (40) being at least partially filled with a substance (100) in the initial configuration, **characterized by** the steps of
preventing in an initial configuration a fluidic communication of the first chamber (40) with the second chamber (50) with the aid of a material-bonded connection of the polymer membrane film (30) to the fluidic barrier element (60), and transferring the substance (100) from the first chamber (40) into the second chamber (50) by applying to the substance (100) a pressure that is chosen to be great enough that the connection of the polymer membrane film (30) to the fluidic barrier element (60) is disconnected.

## Revendications

1. Vanne normalement fermée (200) pour composants microfluidiques, notamment à base d'un système polymère stratifié, comprenant
un substrat polymère (10),
un film membranaire polymère (30), qui est agencé sur le substrat polymère (10),
le substrat polymère (10) comprenant une première chambre (40), une seconde chambre (50) et un élément bloquant fluide (60), et l'élément bloquant fluide (60) séparant la première chambre (40) de la seconde chambre (50), l'élément bloquant fluide (60) étant configuré sous la forme d'une traverse et formant le siège de la vanne normalement fermée, et
la première chambre (40) étant couplée fluidiquement avec la seconde chambre (50) par le biais du film membranaire polymère (30), **caractérisée en ce que**
selon une configuration initiale, une connexion du film membranaire polymère (30) avec l'élément bloquant fluide (60) empêche une communication fluidique de la première chambre (40) avec la seconde chambre (50),
selon la configuration initiale, la première chambre (40) est au moins partiellement remplie avec une substance (100), et un transfert de la substance (100) depuis la première chambre (40) dans la seconde chambre (50) a lieu par application d'une pression sur la substance (100), qui est choisie suffisamment élevée pour que la connexion du film membranaire polymère (30) avec l'élément bloquant fluide (60) soit séparée, et
la connexion du film membranaire polymère (30) avec l'élément bloquant fluide (60) est une connexion par accouplement de matière.

2. Vanne normalement fermée selon la revendication 1, **caractérisée en ce que** la connexion par accouplement de matière du film membranaire polymère (30) avec l'élément bloquant fluide (60) est réalisée à l'aide d'une connexion de soudure du film membranaire polymère (30) avec l'élément bloquant fluide (60) ayant une force de rupture prédéterminée.

3. Vanne normalement fermée selon la revendication 1, **caractérisée en ce que** la connexion par accouplement de matière du film membranaire polymère (30) avec l'élément bloquant fluide (60) est réalisée à l'aide d'une couche de cire (80) entre le film membranaire polymère (30) et l'élément bloquant fluide (60).

4. Vanne normalement fermée selon l'une quelconque des revendications 1 à 3, **caractérisée en ce que**, selon la configuration initiale, le film membranaire polymère (30) est revêtu avec une seconde couche de cire (90) d'une épaisseur prédéterminée sur le côté opposé à l'élément bloquant fluide (60) dans la zone de l'élément bloquant fluide (60).

5. Vanne normalement fermée selon l'une quelconque des revendications 1 à 4, **caractérisée en ce que** le transfert de la substance (100) depuis la première chambre (40) dans la seconde chambre (50) a en outre lieu par chauffage de l'emplacement de coupure entre le film membranaire polymère (30) et l'élément bloquant fluide (60), la chaleur introduite étant choisie de sorte que la connexion du film membranaire polymère (30) avec l'élément bloquant fluide (60) soit séparée.

6. Vanne normalement fermée selon la revendication 3 ou 4, **caractérisée en ce que** la première couche de cire (80) et/ou la seconde couche de cire (90) sont en paraffine.

7. Procédé d'exploitation d'une vanne normalement fermée (200), comprenant
un substrat polymère (10),
un film membranaire polymère (30), qui est agencé sur le substrat polymère (10),
le substrat polymère (10) comprenant une première chambre (40), une seconde chambre (50) et un élément bloquant fluide (60), et l'élément bloquant fluide (60) séparant la première chambre (40) de la seconde chambre (50), et l'élément bloquant fluide (60) étant configuré sous la forme d'une traverse et formant le siège de la vanne normalement fermée,
la première chambre (40) étant couplée fluidiquement avec la seconde chambre (50) par le biais du film membranaire polymère (30) et, selon la configuration initiale, la première chambre (40) étant au moins partiellement remplie avec une substance (100),
**caractérisé par** les étapes suivantes :
l'inhibition selon une configuration initiale d'une communication fluidique de la première chambre (40) avec la seconde chambre (50) à l'aide d'une connexion par accouplement de matière du film membranaire polymère (30) avec l'élément bloquant fluide (60),
le transfert de la substance (100) depuis la première chambre (40) dans la seconde chambre (50) par application d'une pression sur la substance (100), qui est choisie suffisamment élevée pour que la connexion du film membranaire polymère (30) avec l'élément bloquant fluide (60) soit séparée.
